# FASCICULE DE BREVET EUROPEEN

(11) **EP 2 546 049 B1**
(45) Date de publication et mention de la délivrance du brevet: **05.06.2019**
(21) Numéro de dépôt: 12305804.2
(22) Date de dépôt: 05.07.2012
(51) Int. Cl.: B29C 70/20, B29B 11/16, B29C 70/22, B29C 70/34, B29L 31/30, B29C 70/38

(54) **Procédé de réalisation d'un panneau avec une double courbure**
Herstellungsverfahren eines Paneels mit einer Doppelkrümmung
Method for manufacturing a panel with a double curvature

(30) Priorité: 11.07.2011 FR 1156276
(43) Date de publication de la demande: 16.01.2013
(73) Titulaire: Airbus Opérations SAS, 31060 Toulouse (FR)
(72) Inventeur: Bernadet, Philippe, 31770 COLOMIERS (FR); Giuseppin, Laurent, 82700 FINHAN (FR)
(74) Mandataire: Fantin, Laurent

(56) Documents cités:
- EP-A1- 2 058 101
- WO-A1-96/24712
- GB-A- 2 452 298
- US-A- 5 082 701
- US-A- 5 529 826
- US-A1- 2011 086 199

## Description

La présente invention se rapporte à un procédé de réalisation d'un panneau avec une double courbure.

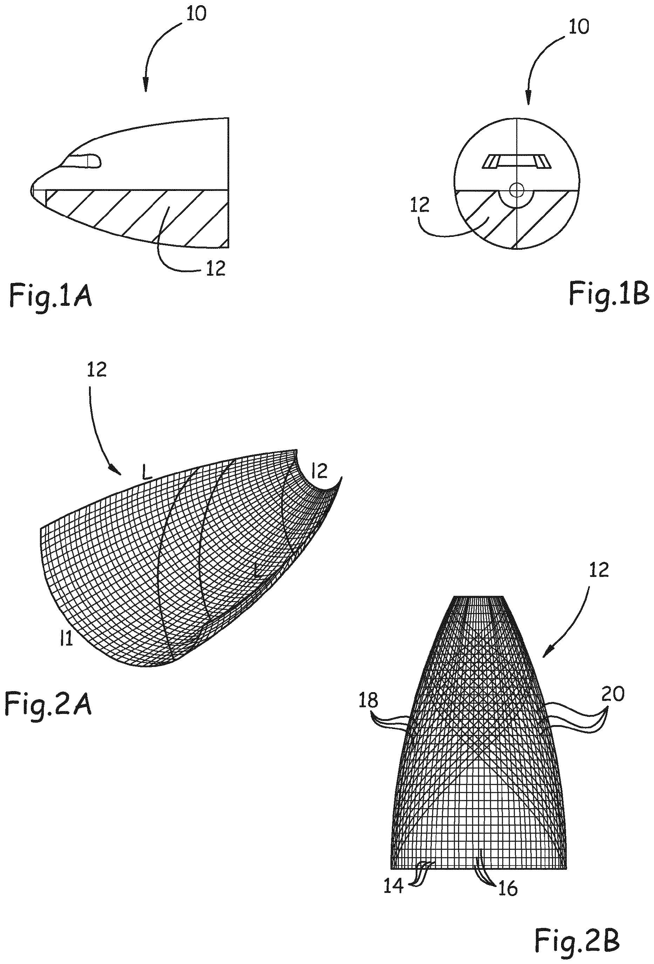

Sur les figures 1A et 1B, on a représenté l'avant d'un aéronef 10 et plus particulièrement un panneau 12 appelé barque formant une partie du fuselage et comprenant une double courbure. Ce panneau 12 de forme tridimensionnelle s'étend sur un secteur angulaire de 180° et sur une longueur pouvant atteindre 9 m pour certains modèles d'aéronef, ce qui peut représenter une surface de l'ordre de 60 m².

Pour réduire la masse embarquée, ce panneau 12 est réalisé en matériau composite à partir de fibres orientées selon différentes direction et noyées dans une matrice de résine.

Pour la suite de la description, on entend par direction longitudinale, la direction qui s'étend de la pointe à la queue de l'aéronef. On entend par plan longitudinal un plan contenant la direction longitudinale. On entend par plan transversal un plan perpendiculaire à la direction longitudinale.

Pour atteindre une résistance mécanique optimale, les fibres sont disposées selon quatre séries orientées selon quatre directions une première direction à 0°, une deuxième direction à 90°, une troisième direction à +45° et une quatrième direction à -45°.

Comme illustré sur les figures 2A et 2B, les fibres 14 de la première série orientées à 0° doivent être disposées de manière à ce que les points d'intersections (appelés également noeuds) de ces fibres 14 avec une courbe perpendiculaire en ces points d'intersection avec les fibres 14 soient à égale distance les uns des autres.

Les fibres 16 de la deuxième série orientées à 90° doivent être disposées de manière à ce qu'en tous noeuds, les fibres 16 soient perpendiculaires aux fibres 14.

Les fibres 18 de la troisième série orientées à +45° doivent être disposées de manière à ce qu'en tous noeuds, les fibres 18 soient orientées à 45° par rapport aux fibres 14.

Les fibres 20 de la quatrième série orientées à -45° doivent être disposées de manière en ce qu'en tous noeuds les fibres 20 soient disposées à -45° par rapport aux fibres 14.

Par conséquent, pour obtenir une résistance mécanique optimale, les fibres 14, 16, 18 et 20 ne sont pas disposées selon des trajectoires géodésiques.

Pour réaliser un panneau avec une double courbure, il convient de réaliser un moule ayant une surface avec une forme tridimensionnelle conforme à la pièce à réaliser et de positionner les fibres pré-imprégnées à l'aide d'au moins une tête de dépose qui suit les trajectoires des fibres de manière à obtenir un agencement de fibres comme précédemment décrit pour parvenir à une résistance mécanique optimale.

Suite à la mise en place des fibres, l'ensemble est polymérisé pour un panneau 12. Ce mode de réalisation requiert des moyens robotisés complexes et onéreux de type AFP (pour Automatic Fibre Placement) qui impactent le prix de revient dudit panneau.

Le document US 5,529,826 décrit une préforme à plat qui comprend deux séries de fibres à 0° et à 90°. Cette préforme à plat est déformée pour obtenir une préforme tridimensionnelle.

Aussi, la présente invention vise à pallier les inconvénients de l'art antérieur en proposant un procédé de réalisation d'un panneau à double courbure.

A cet effet, l'invention a pour objet un procédé de réalisation d'un panneau d'un aéronef en matériau composite à double courbure, selon la revendication 1, ce panneau comprenant au moins deux séries de fibres, les fibres de la première série étant orientées à 0°, les fibres de la deuxième série étant orientées à 90°, les fibres étant disposées selon des trajectoires non géodésiques, ledit panneau étant obtenu à partir d'une préforme tridimensionnelle (24) comprenant des fibres (14, 16, 18, 20) réparties selon un agencement déterminé, le procédé consistant à fabriquer une préforme à plat (22) à partir de fibres sèches pour permettre aux fibres de glisser les unes par rapport aux autres lors d'une déformation, les fibres (14, 16, 18, 20) au niveau de la préforme à plat (22) suivant des trajectoires prédéfinies pour obtenir l'agencement déterminé souhaité des fibres après déformation, les fibres de la première série étant disposées au niveau de la préforme à plat (22) selon une trajectoire, différente de l'orientation à 0°, calculée par ordinateur de manière à ce que lesdites fibres soient orientées à 0° dans la préforme tridimensionnelle après déformation, les fibres de la deuxième série étant disposées au niveau de la préforme à plat (22) selon une trajectoire, différente de l'orientation à 90°, calculée par ordinateur de manière à ce que lesdites fibres soient orientées à 90° dans la préforme tridimensionnelle après déformation, à déformer ladite préforme à plat (22) de manière à obtenir la préforme tridimensionnelle (24), à noyer les fibres sèches de la préforme tridimensionnelle dans une matrice de résine et à polymériser la préforme tridimensionnelle et la résine pour obtenir le panneau.D'autres caractéristiques et avantages ressortiront de la description qui va suivre de l'invention, description donnée à titre d'exemple uniquement, en regard des dessins annexés sur lesquels :
- la figure 1A est une vue latérale de l'avant d'un aéronef,
- la figure 1B est une vue de face de l'avant d'un aéronef,
- la figure 2A est une vue en perspective d'un panneau à double courbure selon un premier angle de vue illustrant la position des fibres,
- la figure 2B est une vue en perspective du panneau de la figure 2A selon un autre angle de vue,
- la figure 3 est une vue de dessus d'un panneau à plat permettant d'obtenir le panneau illustré sur la figure 2A,
- la figure 4 est une vue en perspective du panneau plan de la figure 3 avant déformation et d'un exemple d'outillage utilisé pour sa déformation de manière à obtenir un panneau à double courbure comme celui illustré sur la figure 2A,
- la figure 5A est une vue de dessus d'un panneau à plat illustrant une première série de fibres disposées selon la direction longitudinale,
- la figure 5B est une vue en perspective du panneau de la figure 5A après déformation,
- la figure 6A est une vue de dessus d'un panneau à plat illustrant une deuxième série de fibres disposées à 90°,
- la figure 6B est une vue en perspective du panneau de la figure 6A après déformation,
- la figure 7A est une vue de dessus d'un panneau à plat illustrant une deuxième série de fibres disposées à 45°,
- la figure 7B est une vue en perspective du panneau de la figure 7A après déformation,
- la figure 8 est un schéma illustrant les différentes orientations de fibres maintenues par une couture,
- la figure 9 est un schéma illustrant une préforme tridimensionnelle sur laquelle sont représentées des fibres de référence,
- la figure 10 est un schéma illustrant une partie d'une préforme à plat sur laquelle sont positionnées les fibres de référence,
- les figures 11 et 12 sont des schémas illustrant le positionnement des points d'intersections des fibres au niveau de la préforme à plat à partir des points correspondant de la préforme tridimensionnelle pour deux séries de fibres, et
- les figures 13 et 14 sont des schémas illustrant le positionnement des points d'intersections d'une fibre d'une troisième série avec les fibres d'une première série au niveau de la préforme à plat à partir des points correspondant de la préforme tridimensionnelle.

Sur les différentes figures, on a représenté en 12 un panneau à double courbure, appelé barque, prévu au niveau du fuselage en partie inférieure de l'avant d'un aéronef.

A titre indicatif, ce panneau peut avoir une superficie de l'ordre de 60 m².

Toutefois, l'invention peut s'appliquer à d'autres panneaux d'un aéronef ayant une double courbure et un agencement de fibres particulier.

Ce panneau comprend au moins deux séries de fibres, les fibres de la première série étant orientées selon une première direction, les fibres de la deuxième série étant disposées selon une deuxième direction différente de la première, les fibres étant disposées selon des trajectoires non géodésiques.

Selon un mode de réalisation, le panneau comprend des fibres disposées selon quatre séries orientées selon quatre directions une première direction à 0°, une deuxième direction à 90°, une troisième direction à +45° et une quatrième direction à -45° pour obtenir un optimum mécanique.

Les fibres 14 de la première série orientées à 0° doivent être disposées de manière à ce que les points d'intersections (appelés également noeuds) de ces fibres 14 avec une courbe perpendiculaire en ces points d'intersection avec les fibres 14 soient à égale distance les uns des autres.

Les fibres 16 de la deuxième série orientées à 90° doivent être disposées de manière à ce qu'en tous noeuds, les fibres 16 soient perpendiculaires aux fibres 14.

Les fibres 18 de la troisième série orientées à +45° doivent être disposées de manière à ce qu'en tous noeuds, les fibres 18 soient orientées à 45° par rapport aux fibres 14.

Les fibres 20 de la quatrième série orientées à -45° doivent être disposées de manière en ce qu'en tous noeuds les fibres 20 soient disposées à -45° par rapport aux fibres 14.

Selon l'invention, le procédé de réalisation consiste à fabriquer une préforme à plat 22 de fibres sèches, à déformer ladite préforme à plat 22 de manière à obtenir une préforme tridimensionnelle 24 dont la géométrie est identique à celle du panneau 12 à réaliser puis à noyer les fibres sèches de la préforme tridimensionnelle 24 dans une matrice de résine.

Les fibres et la résine ne sont pas plus détaillées car elles sont choisies par l'homme du métier en fonction des caractéristiques mécaniques du panneau 12 recherchées.

La dernière étape du procédé peut être réalisée en utilisant des techniques connues comme la mise en place de la préforme sèche dans un moule rigide et l'injection de résine liquide dans le moule pour les procédés RTM (Resin Transfert Molding) ou LRI (Liquid Resin Infusion) ou dans une enceinte sous vide avec un film de résine dans le cas du procédé RFI (Resin Film Infusion) ou par toute autre technique.

La préforme tridimensionnelle 24 et la résine subissent un cycle de polymérisation en fonction des matériaux utilisés pour les fibres et la résine et des caractéristiques du panneau 12 fini recherchées.

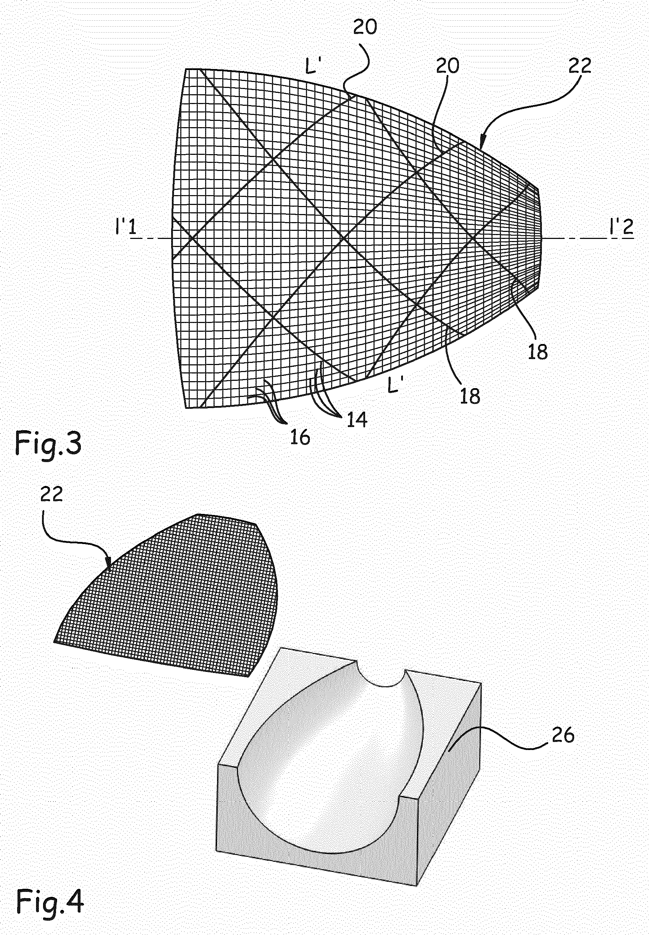

La mise en forme de la préforme à plat 22 peut être réalisée de différentes manières. Selon un mode de réalisation, la préforme à plat 22 est plaquée contre un moule dont la surface est conforme à la géométrie d'une des surfaces du panneau 12 fini. Selon l'exemple illustré sur la figure 4, la préforme à plat 22 est plaquée contre la surface d'un moule 26 dont la géométrie est conforme à celle de la surface convexe du panneau.

En variante, la préforme à plat 22 peut être disposée entre un moule et un contre-moule, la surface du moule ou du contre-moule ayant une géométrie conforme à celle de la surface convexe du panneau.

Les fibres étant sèches (non pré-imprégnées de résine), elles peuvent glisser les unes par rapport aux autres lors de la transformation de la préforme à plat 22 en préforme tridimensionnelle 24.

Comme illustré sur les figures 3, 5A, 6A, 7A, la préforme à plat 22 est réalisé en disposant les fibres 14, 16, 18, 20 selon un agencement particulier (selon des directions différentes de celles qu'elles auront dans la préforme tridimensionnelle) de manière à ce que lesdites fibres 14, 16, 18, 20 soient disposées selon les directions souhaitées au niveau de la préforme tridimensionnelle après déformation.

Le fait de déposer les fibres à plat permet d'utiliser des machines de dépose plus simples et moins couteuses et limite le temps de pose. Tous ces éléments contribue à réduire les couts de revient du panneau.

Selon le mode de réalisation illustré, les fibres 14, 16, 18, 20 sont disposées à plat de manière à obtenir une préforme à plat 22. Les fibres 14, 16, 18, 20 sont disposées respectivement selon une première, deuxième, troisième et quatrième trajectoires de manière à être orientées selon les quatre directions prédéfinies ci-avant, à 0°, 90°, +45° et -45° et obtenir un optimum mécanique après déformation et mise en forme de la préforme tridimensionnelle 24.

La préforme à plat 22 a la même superficie que la préforme tridimensionnelle 24. Selon un mode de réalisation, la longueur L' de la préforme à plat qui correspond à la longueur L (parallèle à la direction longitudinale) de la préforme tridimensionnelle est supérieure à la longueur L, le pourcentage d'allongement (L'-L)/L étant égal à 2,5%.

La courbe l1' de la préforme à plat 22 qui correspond à la courbe l1 (bord aval du panneau) de la préforme tridimensionnelle 24 est supérieure à l1, le pourcentage d'allongement (l1'-l1)/l1 étant égal à 1,1%.

La courbe l2' de la préforme à plat 22 qui correspond à la courbe l2 (bord amont du panneau) de la préforme tridimensionnelle 24 est supérieure à l2, le pourcentage d'allongement (l2'-l2)/l2 étant égal à 1,1%.

Les trajectoires des fibres 14, 16, 18, 20 sont déterminées par ordinateur de manière à obtenir après déformation les directions à 0°, 90°, +45° et -45°

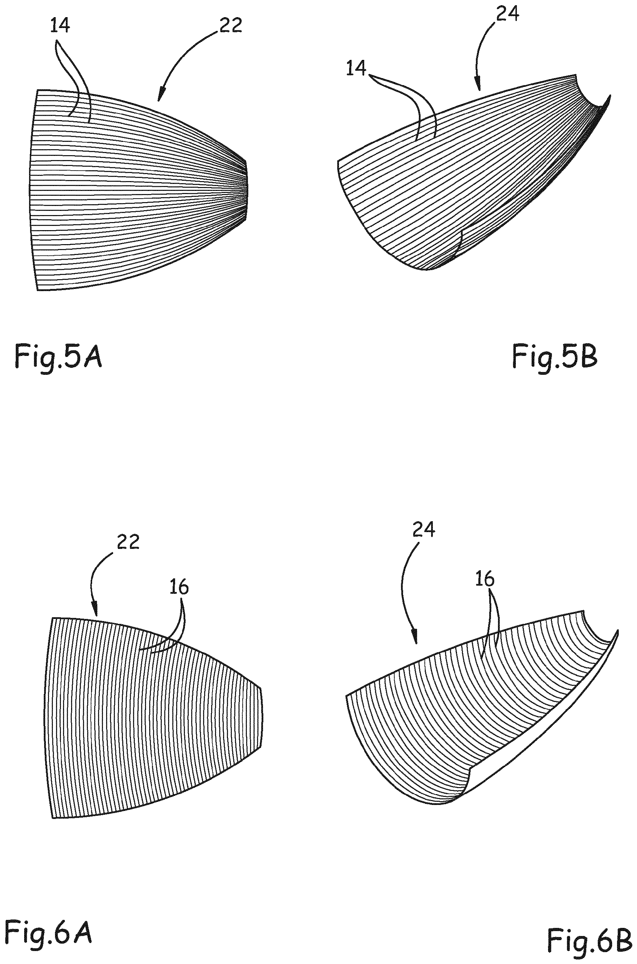

Comme illustré sur la figure 5A, les fibres 14 sont disposées au niveau de la préforme à plat 22 selon une trajectoire calculée par ordinateur de manière à ce que lesdites fibres 14 soient disposées selon la direction à 0° dans la préforme tridimensionnelle 24 comme illustré sur la figure 5B.

Comme illustré sur la figure 6A, les fibres 16 sont disposées au niveau de la préforme à plat 22 selon une trajectoire calculée par ordinateur de manière à ce que lesdites fibres 16 soient disposées selon la direction à 90° dans la préforme tridimensionnelle 24 comme illustré sur la figure 6B.

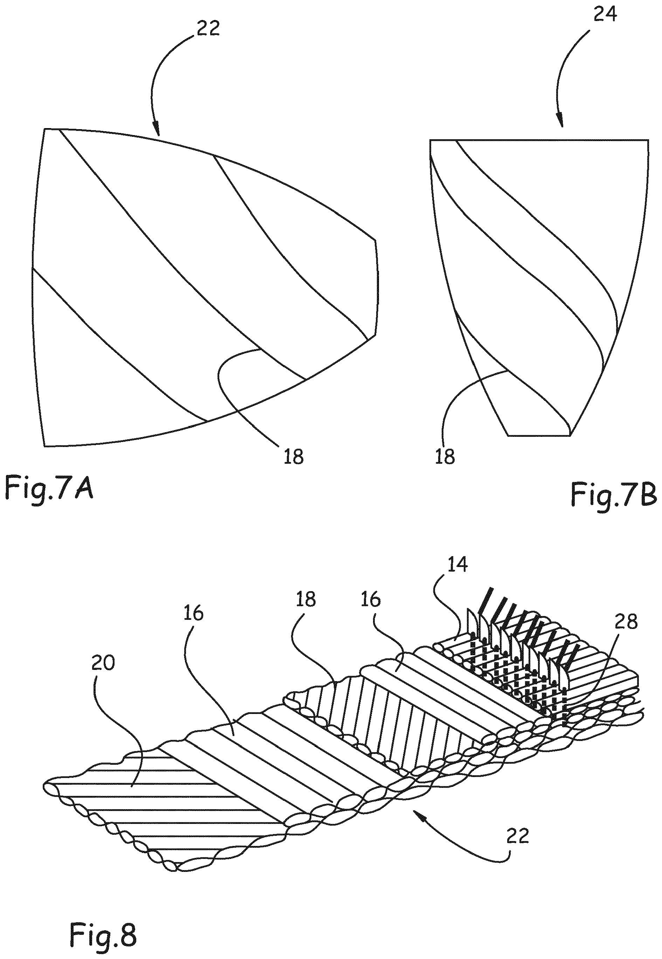

Comme illustré sur la figure 7A, les fibres 18 sont disposées au niveau de la préforme à plat 22 selon une trajectoire calculée par ordinateur de manière à ce que lesdites fibres 18 soient disposées selon la direction à +45° dans la préforme tridimensionnelle 24 comme illustré sur la figure 7B.

Comme illustré sur la figure 8, la préforme à plat 22 peut comprendre une succession de couches avec chacune des directions de fibres différentes.

Pour permettre le glissement des fibres 16, 18, 20, 22 les unes par rapport aux autres lors de la déformation tout en maintenant une tenue de la préforme, il est possible de relier les différentes couches avec au moins une couture 26.

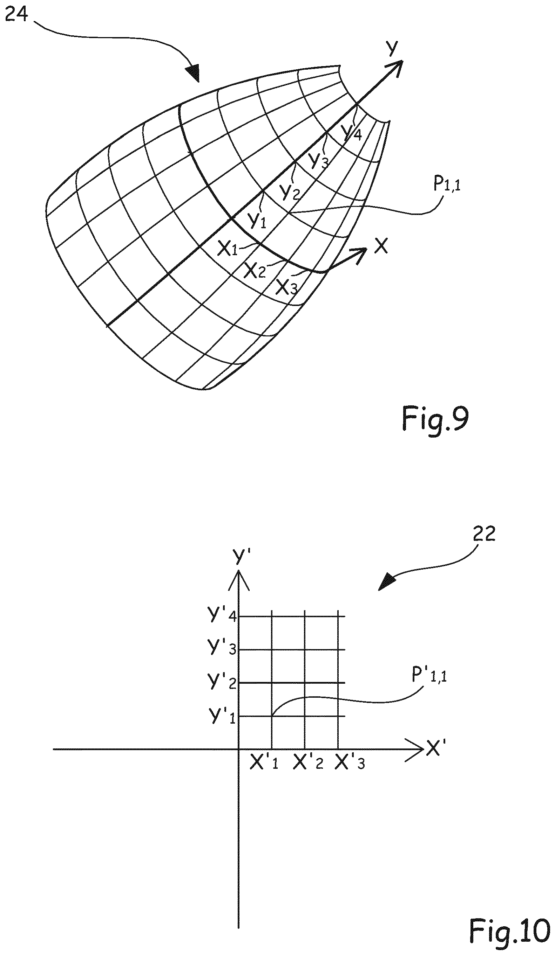

Sur les figures 9 à 14, on a illustré un procédé pour déterminer les trajectoires des fibres à plat de manière à obtenir des fibres réparties de manière adéquate dans la préforme tridimensionnelle 24. Ce procédé consiste à définir sur la préforme tridimensionnelle 24 un premier repère avec un centre O correspondant à l'intersection de la fibre médiane X des fibres 16 orientées à 90° et de la fibre médiane Y des fibres 14 orientées à 0°, comme illustré sur la figure 9. Le fait de prévoir un centre O au milieu de la préforme tridimensionnelle 24 permet de limiter les distorsions au niveau des angles. Toutefois, d'autres fibres peuvent être utilisées comme fibre de référence. Ainsi, le point O n'est pas nécessairement centré.

Pour le secteur disposé en haut de la fibre médiane X et à droite de la fibre médiane Y, les points d'intersection des fibres 14 avec la fibre médiane X sont référencés X1, X2, X3,... et les points d'intersection des fibres 16 avec la fibre médiane Y sont référencées Y1, Y2, Y3,....

Sur la préforme tridimensionnelle, pour tous les points d'intersection, on détermine la longueur de la courbe OXi (i variant de 1 à n, n étant le nombre de fibres orientées à 0° d'un côté de la fibre médiane Y) et la longueur de la courbe OYj (j variant de 1 à m, avec m étant le nombre de fibres orientées à 90° d'un côté de la fibre médiane X).

Comme illustré sur la figure 10, sur la forme à plat, on positionne au centre le point O' qui correspond au point O de la préforme tridimensionnelle. La forme à plat correspond au plan de tangence de la surface tridimensionnelle au point 0. On positionne alors deux axes X' (axe des abscisses) et Y' (axe des ordonnées) qui correspondent respectivement à la fibre médiane X et à la fibre médiane Y. Les deux axes X' et Y' sont perpendiculaires. On positionne les points X'1, X'2, X'3,... sur l'axe X' et les points Y'1, Y'2, Y'3,...sur l'axe Y'.

Pour chaque point, la distance OX'i est égale à la longueur de la courbe OXi (i variant de 1 à n) et la distance OY'j est égale à la longueur de la courbe OYj (j variant de 1 à m).

Sur la préforme tridimensionnelle, le point P1,1 correspond à l'intersection de la fibre orientée à 0° passant par le point X1 et de la fibre orientée à 90° passant par le point Y1. En suivant, on détermine la longueur de la courbe X1P1,1 et la longueur de la courbe Y1P1,1.

Sur la forme à plat, on positionne le point P'1,1 qui a pour abscisse la longueur de la courbe Y1P1,1 et pour ordonnée la longueur de la courbe X1P1,1.

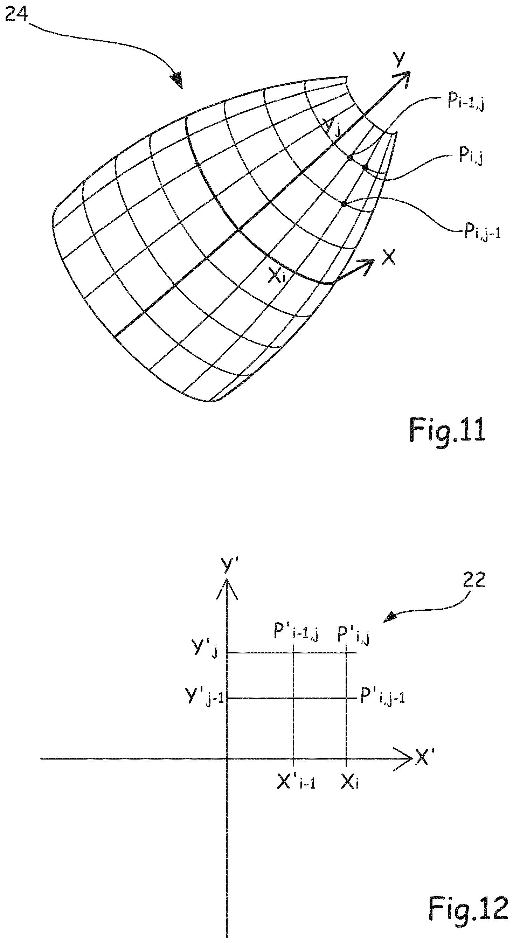

Sur la préforme tridimensionnelle, chaque point Pi,j correspond à l'intersection de la fibre orientée à 0° passant par le point Xi et de la fibre orienté à 90° passant par le point Yj, i variant de 1 à n et j variant de 1 à m. Pour chaque point Pi,j, on détermine la longueur de la portion de la fibre passant par Yj allant du point Pi-1,j au point Pi,j et la longueur de la portion de la fibre passant par Xi allant du point Pi,j-1 au point Pi,j, comme illustré sur la figure 11.

Sur la forme à plat, à chaque point Pi,j, on fait correspondre le point P'i,j. Ce point P'i,j est positionné à partir des points P'i-1,j et P'i,j-1 sachant que la distance séparant les points P'i-1,j et P'i,j est égale à la longueur de la portion de la fibre passant par Yj allant du point Pi-1,j au point Pi,j et que la distance séparant les points P'i,j-1 et p'i,j est égale à la longueur de la portion de la fibre passant par Xi du point Pi,j-1 au point Pi,j, comme illustré sur la figure 12.

Ayant positionné tous les points P'i,j du quart de plan supérieur droit, on procède de la même manière pour positionner les points P'i,j des trois autres quarts de plan.

Ainsi, la fibre F1 orientée à 0° passant par le point X1 au niveau de la préforme tridimensionnelle passe au niveau de la forme à plat par les points P'1,j avec j variant de -m à +m. De la même manière, la fibre Fi orientée à 0° passant par le point Xi au niveau de la préforme tridimensionnelle passe au niveau de la forme à plat par les points P'i,j avec j variant de -m à +m.

De la même manière, la fibre Fj orientée à 90° passant par le point Yj au niveau de la préforme tridimensionnelle passe au niveau de la forme à plat par les points P'i,j avec i variant de -n à +n.

La mise en place des fibres selon les directions à 0° et à 90° peut être réalisée de manière automatisée avec une tête de dépose qui suit les trajectoires définies par les points P'i,j.

Les fibres orientées à 0° et à 90° étant positionnées sur la forme à plat, il est possible de positionner les fibres orientées à 45° et/ou à 135°.

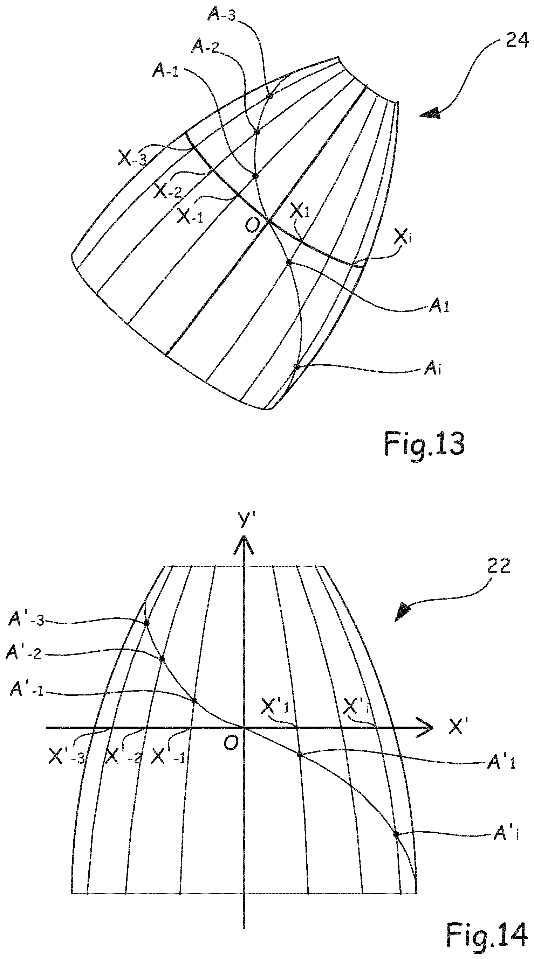

Comme illustré sur les figures 13 et 14, pour chacune de ces fibres, on procède de la manière suivante :
Dans un premier temps, au niveau de la forme tridimensionnelle, on positionne les points Ai avec i variant de -n à +n, qui correspondent à l'intersection de la fibre à positionner avec les fibres Fi orientées à 0°. Pour chaque point Ai, on détermine la longueur de la portion de la fibre Fi allant du point Xi au point Ai, Xi étant le point d'intersection de la fibre Fi orientée à 0° avec la fibre médiane X.

A partir de ces longueurs, il est possible de déterminer la position des points A'i avec i variant de -n à + n au niveau de la forme à plat, pour chaque point A'i la longueur de la fibre Fi sur la forme à plat allant du point X'i au point A'i étant égale à la longueur de la courbe de la fibre Fi sur la préforme tridimensionnelle allant du point Xi au point Ai.

Ainsi, la fibre passant par les points Ai au niveau de la forme tridimensionnelle passe par les points A'i au niveau de la forme à plat.

Au lieu d'utiliser les points Xi pour déterminer la trajectoire des fibres à 45° ou à 135°, on peut utiliser les points Yj. Dans ce cas, au niveau de la préforme tridimensionnelle, on positionne les points Aj avec j variant de -m à +m, qui correspondent à l'intersection de la fibre à positionner avec les fibres Fj orientées à 90°. Pour chaque point Aj, on détermine la longueur de la portion de la fibre Fj allant du point Yj au point Aj, Yj étant le point d'intersection de la fibre Fj orientée à 90° avec la fibre médiane Y.

A partir de ces longueurs, il est possible de déterminer la position des points A'j avec j variant de -m à + m au niveau de la forme à plat, pour chaque point A'j la longueur de la portion de la fibre Fj sur la forme à plat allant du point Y'j au point A'j étant égale à la longueur de la portion de la fibre Fj sur la préforme tridimensionnelle allant du point Yj au point Aj.

Ainsi, la fibre passant par les points Aj au niveau de la préforme tridimensionnelle passe par les points A'j au niveau de la forme à plat.

## Revendications

1. Procédé de réalisation d'un panneau d'un aéronef en matériau composite à double courbure, ce panneau comprenant au moins deux séries de fibres, les fibres de la première série étant orientées à 0°, les fibres de la deuxième série étant orientées à 90°, les fibres étant disposées selon des trajectoires non géodésiques, ledit panneau étant obtenu à partir d'une préforme tridimensionnelle (24) comprenant des fibres (14, 16, 18, 20) réparties selon un agencement déterminé, le procédé consistant à fabriquer une préforme à plat (22) à partir de fibres sèches pour permettre aux fibres de glisser les unes par rapport aux autres lors d'une déformation, les fibres (14, 16, 18, 20) au niveau de la préforme à plat (22) suivant des trajectoires prédéfinies pour obtenir l'agencement déterminé souhaité des fibres après déformation, les fibres de la première série étant disposées au niveau de la préforme à plat (22) selon une trajectoire, différente de l'orientation à 0°, calculée par ordinateur de manière à ce que lesdites fibres soient orientées à 0° dans la préforme tridimensionnelle après déformation, les fibres de la deuxième série étant disposées au niveau de la préforme à plat (22) selon une trajectoire, différente de l'orientation à 90°, calculée par ordinateur de manière à ce que lesdites fibres soient orientées à 90° dans la préforme tridimensionnelle après déformation, à déformer ladite préforme à plat (22) de manière à obtenir la préforme tridimensionnelle (24), à noyer les fibres sèches de la préforme tridimensionnelle dans une matrice de résine et à polymériser la préforme tridimensionnelle et la résine pour obtenir le panneau.

2. Procédé de réalisation d'un panneau d'un aéronef en matériau composite à double courbure selon la revendication 1, **caractérisé en ce que** la préforme à plat (22) est plaquée contre la surface d'un moule (26) dont la géométrie est conforme à celle de la surface convexe du panneau.

3. Procédé de réalisation d'un panneau d'un aéronef en matériau composite à double courbure selon l'une quelconque des revendications précédentes, **caractérisé en ce que** la préforme à plat (22) est intercalée entre un moule et un contre-moule pour la déformer.

4. Procédé de réalisation d'un panneau d'un aéronef en matériau composite à double rayon de courbure selon l'une quelconque des revendications précédentes, **caractérisé en ce qu'**il consiste pour une préforme tridimensionnelle avec au moins deux séries de fibres, à déterminer des points Pi,j correspondant à l'intersection d'une fibre (Fi) d'une première série avec une fibre (Fj) d'une deuxième série, à mesurer pour chaque point Pi,j d'une part la longueur de la portion de la fibre (Fi) de la première série allant du point Pi,j au point Pi,j-1 et d'autre part la longueur de la portion de la fibre (Fj) de la deuxième série allant du point Pi,j au point Pi-1,j et à placer les points P'i,j au niveau de la préforme à plat correspondant respectivement au point Pi,j de la préforme tridimensionnelle à partir des points P'i-1,j et P'i,j-1 déjà placés sachant que la distance séparant les points P'i-1,j et P'i,j est égale à la longueur de la portion de la fibre allant du point Pi-1,j au point Pi,j et que la distance séparant les points P'i,j-1 et p'i,j est égale à la longueur de la portion de la fibre du point Pi,j-1 au point Pi,j.

5. Procédé de réalisation d'un panneau d'un aéronef en matériau composite à double rayon de courbure selon la revendication 4, **caractérisé en ce qu'**il consiste à choisir pour chaque série une fibre de référence (X, Y) correspondant respectivement à la fibre contenant les points Pi,0 et à la fibre contenant les points P0,j et à positionner les points P'i,j à partir des points des fibres de référence (X,Y).

6. Procédé de réalisation d'un panneau d'un aéronef en matériau composite à double rayon de courbure selon la revendication 4 ou 5, **caractérisé en ce que** les fibres de référence sont les fibres médianes de chaque série.

7. Procédé de réalisation d'un panneau d'un aéronef en matériau composite à double rayon de courbure selon l'une quelconque des revendications 4 à 6, **caractérisé en ce qu'**il consiste après avoir placé au moins deux séries de fibres au niveau de la préforme à plat (22), pour chacune des fibres d'une troisième série sécantes avec les fibres d'une première série déjà placée, à positionner, au niveau de la forme tridimensionnelle, les points Ai qui correspondent à l'intersection de la fibre à positionner avec les fibres de la première série déjà placée, à déterminer pour chaque point Ai la longueur de la portion de la fibre de la première série déjà placée allant du point Ai jusqu'à la fibre de référence de la deuxième série déjà placée, à déterminer la position des points A'i au niveau de la préforme à plat (22) correspondant aux points Ai, pour chaque point A'i la longueur de la fibre de la première série déjà placée au niveau de la préforme à plat allant du point A'i jusqu'à la fibre de référence de la deuxième série déjà placée étant égale à la longueur de la portion de la fibre de la première série au niveau de la préforme tridimensionnelle allant du point Ai jusqu'à la fibre de référence de la deuxième série déjà placée.

## Patentansprüche

1. Verfahren zur Herstellung einer Platte eines Luftfahrzeugs aus Verbundmaterial mit doppelter Krümmung, wobei diese Platte wenigstens zwei Reihen von Fasern aufweist, die Fasern der ersten Reihe auf 0° ausgerichtet sind, die Fasern der zweiten Reihe auf 90° ausgerichtet sind, die Fasern entlang nicht-geodätischer Bahnen angeordnet sind, und die Platte ausgehend von einer dreidimensionalen Vorform (24) erhalten wird, die entsprechend einer bestimmten Anordnung verteilte Fasern (14, 16, 18, 20) aufweist, und wobei das Verfahren darin besteht, eine flache Vorform (22) auf der Grundlage von trockenen Fasern herzustellen, um ein Aneinandergleiten der Fasern bei einer Deformation zu ermöglichen, wobei die Fasern (14, 16, 18, 20) im Bereich der flachen Vorform (22) vorbestimmten Bahnen folgen, um eine bestimmte gewünschte Anordnung der Fasern nach der Deformation zu erhalten, wobei die Fasern der ersten Reihe im Bereich der flachen Vorform (22) entlang einer Bahn mit einer von 0° verschiedenen Ausrichtung angeordnet ist, die durch einen Rechner berechnet ist, um auf diese Weise die Fasern in der dreidimensionalen Vorform nach der Deformation auf 0° auszurichten, und wobei die zweite Reihe im Bereich der zweiten flachen Vorform (22) entlang einer Bahn mit einer von 90° verschiedenen Ausrichtung angeordnet sind, die durch einen Rechner berechnet ist, um auf diese Weise die Fasern in der dreidimensionalen Vorform nach der Verformung auf 90° auszurichten, und das darin besteht, die flache Vorform (22) zu verformen, um auf diese Weise die dreidimensionale Vorform (24) zu erhalten, die trockenen Fasern der dreidimensionalen Vorform in einer Harzmatrix zu tränken und die dreidimensionale Vorform und das Harz zu polymerisieren, um die Platte zu erhalten.

2. Verfahren zur Herstellung einer Platte eines Luftfahrzeugs aus Verbundmaterial mit doppelter Krümmung nach Anspruch 1, **dadurch gekennzeichnet, dass** die flache Vorform (22) gegen die Oberfläche einer Form (26) gedrückt wird, deren Geometrie mit derjenigen der konvexen Oberfläche der Platte übereinstimmt.

3. Verfahren zur Herstellung einer Platte eines Luftfahrzeugs aus Verbundmaterial mit doppelter Krümmung nach einem der vorhergehenden Ansprüche, **dadurch gekennzeichnet, dass** die flache Vorform (22) zwischen eine Form und eine Gegenform eingebracht wird, um diese zu verformen.

4. Verfahren zur Herstellung einer Platte eines Luftfahrzeugs aus Verbundmaterial mit doppelter Krümmung nach einem der vorhergehenden Ansprüche, **dadurch gekennzeichnet, dass** dieses darin besteht, für eine dreidimensionale Vorform mit wenigstens zwei Reihen von Fasern Punkte Pi,j zu bestimmen, die der Überschneidung einer Faser (Fi) einer ersten Reihe mit einer Faser (Fj) einer zweiten Reihe entsprechen, für jeden Punkt Pi,j einerseits die Länge des Abschnitts der Faser (Fi) der ersten Reihe zu bestimmen, der sich vom Punkt Pi,j zum Punkt Pi,j-1 erstreckt, und andererseits die Länge des Abschnitts der Faser (Fj) der zweiten Reihe zu messen, die sich von dem Punkt Pi,j zum Punkt Pi-1,j erstreckt, und die Punkte P'i,j im Bereich der flachen Vorform jeweils entsprechend den Punkten Pi,j der dreidimensionalen Vorform anzuordnen, ausgehend von den bereits angeordneten Punkten P'i-1,j und P'i,j-1, unter Berücksichtigung, dass die Entfernung zwischen den Punkten P'i-1,j und P'i,j gleich der Länge des Faserabschnitts ist, der sich vom Punkt Pi-1,j bis zum Punkt Pi,j erstreckt, und dass der Abstand zwischen den Punkten P'i,j-1 und P'i,j gleich der Länge des Faserabschnitts ist, der sich vom Punkt Pi,j-1 zum Punkt Pi,j erstreckt.

5. Verfahren zur Herstellung einer Platte eines Luftfahrzeugs aus Verbundmaterial mit doppelter Krümmung nach Anspruch 4, **dadurch gekennzeichnet, dass** dieses darin besteht, für jede Reihe eine Bezugsfaser (X, Y) zu bestimmen, die jeweils der Faser entspricht, die die Punkte Pi,0 enthält, und der Faser entspricht, die die Punkte P0,j enthält und die Punkte P'i,j ausgehend von den Punkten der Referenzfaser (X, Y) anzuordnen.

6. Verfahren zur Herstellung einer Platte eines Luftfahrzeugs aus Verbundmaterial mit doppelter Krümmung nach Anspruch 4 oder 5, **dadurch gekennzeichnet, dass** die Bezugsfasern die Mittelfasern jeder Reihe sind.

7. Verfahren zur Herstellung einer Platte eines Luftfahrzeugs aus Verbundmaterial mit doppelter Krümmung nach einem der Ansprüche 4 bis 6, **dadurch gekennzeichnet, dass** dieses darin besteht, nach der Anordnung wenigstens zweier Reihen von Fasern im Bereich der flachen Vorform (22) für die Fasern einer dritten Reihe, die sich mit den Fasern der bereits angeordneten ersten Reihe schneiden, im Bereich der dreidimensionalen Form die Punkte Ai anzuordnen, die der Überschneidung der anzuordnenden Fasern mit den Fasern der bereits angeordneten ersten Reihe entsprechen, für jeden Punkt Ai die Länge des Abschnitts der Faser der bereits angeordneten ersten Reihe zu bestimmen, der sich vom Punkt Ai bis zur Referenzfaser der bereits angeordneten zweiten Reihe erstreckt, die Position der Punkte A'i im Bereich der flachen Vorform (22) zu bestimmen, die den Punkten Ai entsprechen, wobei für jeden Punkt A'i die Länge der Faser der bereits angeordneten ersten Reihe zwischen dem Punkt A'i bis zur Referenzfaser der bereits angeordneten zweiten Reihe gleich der Länge des Abschnitts der ersten Reihe im Bereich der dreidimensionalen Vorform zwischen dem Punkt Ai und der bereits angeordneten Referenzfaser der zweiten Reihe ist.

## Claims

1. Process for the production of a panel of an aircraft that is made of double-curved composite material, said panel comprising at least two series of fibers, the fibers of the first series being oriented at 0°, the fibers of the second series being oriented at 90°, the fibers being arranged along non-geodesic trajectories, said panel being obtained from a three-dimensional preform (24) that comprises fibers (14, 16, 18, 20) that are distributed in a defined arrangement, said process consisting in manufacturing a flat preform (22) with dry fibers to make it possible for the fibers to slide relative to one another during a deformation, the fibers (14, 16, 18, 20) in the flat preform (22) following predefined trajectories to obtain the desired defined arrangement of fibers after deformation, the fibers of the first series being arranged in the flat preform (22) according a trajectory, different from the 0° orientation, calculated by a computer so that this fibers are oriented at 0° in the three-dimensional preform after deformation, the fibers of the second series being arranged in the flat preform (22) according a trajectory, different from the 90° orientation, calculated by a computer so that this fibers are oriented at 90° in the three-dimensional preform after deformation, in deforming said flat preform (22) in such a way as to obtain the three-dimensional preform (24), embedding the dry fibers in a resin matrix and in polymerizing the three-dimensional preform and the resin to obtain the panel.

2. Process for the production of an aircraft panel made of double-curved composite material according to Claim 1, wherein the flat preform (22) is flattened against the surface of a mold (26) whose geometry is in accordance with that of the convex surface of the panel.

3. Process for the production of an aircraft panel made of a double-curved composite material according to any of the preceding claims, wherein the flat preform (22) is inserted between a mold and a counter-mold to deform it.

4. Process for the production of an aircraft panel made of a composite material with a double radius of curvature according to any of the preceding claims, wherein for a three-dimensional preform with at least two series of fibers, it consists in determining points Pi,j that correspond to the intersection of a fiber (Fi) of a first series with a fiber (Fj) of a second series, in measuring for each point Pi,j, on the one hand, the length of the portion of the fiber (Fi) of the first series going from point Pi,j to point Pi,j-1, and, on the other hand, the length of the portion of the fiber (Fj) of the second series going from point Pi,j to point Pi-1,j and in placing the points P'i,j at the flat preform that corresponds respectively to the point Pi,j of the three-dimensional preform starting from points P'i-1,j and P'i,j-1 that are already in place, knowing that the distance that separates the points P'i-1,j and P'i,j is equal to the length of the portion of the fiber going from point Pi-1,j to point Pi,j and that the distance that separates the points P'i,j-1 and P'i,j is equal to the length of the portion of the fiber from point Pi,j-1 to point Pi,j.

5. Process for the production of an aircraft panel made of composite material with a double radius of curvature according to Claim 4, wherein it consists in selecting - for each series - a reference fiber (X, Y) that corresponds respectively to the fiber that contains the points Pi,O and to the fiber that contains the points PO,j and in positioning the points P'i,j starting from the points of reference fibers (X, Y).

6. Process for the production of an aircraft panel made of composite material with a double radius of curvature according to Claim 4 or 5, wherein the reference fibers are the median fibers of each series.

7. Process for the production of an aircraft panel made of composite material with a double radius of curvature according to any of Claims 4 to 6, wherein after having in place at least two series of fibers at the flat preform (22), for each of the fibers of a third series that are secant with the fibers of a first series that is already in place, it consists in positioning, at the three-dimensional form, the points Ai that correspond to the intersection of the fiber that is to be positioned with the fibers of the first series that is already in place, in determining for each point Ai the length of the portion of the fiber of the first series that is already in place going from point Ai up to the reference fiber of the second series that is already in place, in determining the position of the points A'i at the flat preform (22) corresponding to the points Ai, with for each point A'i, the length of the fiber of the first series that is already in place at the flat preform going from point A'i up to the reference fiber of the second series that is already in place being equal to the length of the portion of the fiber of the first series at the three-dimensional preform going from point Ai up to the reference fiber of the second series that is already in place.
